# EUROPÄISCHE PATENTANMELDUNG

(11) **EP 2 093 848 A2**
(43) Veröffentlichungstag der Anmeldung: **26.08.2009**
(21) Anmeldenummer: 09151307.7
(22) Anmeldetag: 26.01.2009
(51) Int. Cl.: H01R 13/66, B60D 1/64, H02M 3/156

(54) **Stecker für den elektrischen Anschluss eines Anhängers an ein Zugfahrzeug**

(30) Priorität: 20.02.2008 DE 202008002334 U
(71) Anmelder: Rüttgerodt, Werner, 34355 Staufenberg (DE)
(72) Erfinder: Rüttgerodt, Werner, 34355 Staufenberg (DE)
(74) Vertreter: Rehberg Hüppe + Partner

(57) **Zusammenfassung**

Bei einem Stecker (1) für den elektrischen Anschluss einer für eine niedrigere Eingangsspannung ausgelegten Elektrik eines Anhängers an die eine höhere Ausgangsspannung liefernde Elektrik eines Zugfahrzeugs, wobei in einem Gehäuse (2) des Steckers (1) ein getaktetes Stromventil für eine Reduzierung der von dem Zugfahrzeug gelieferten Ausgangsspannung auf die Eingangsspannung der Elektrik des Anhängers vorgesehen ist, ist das Stromventil (16) in einer Masse- oder Minusleitung (14) für mehrere Lastkreise (15) vorgesehen.

## Beschreibung

Die Erfindung bezieht sich auf einen Stecker für den elektrischen Anschluss einer für eine niedrigere Eingangsspannung ausgelegten Elektrik eines Anhängers an die eine höhere Ausgangsspannung liefernde Elektrik eines Zugfahrzeugs mit den Merkmalen des Oberbegriffs des unabhängigen Patentanspruchs 1.

### STAND DER TECHNIK

Ein Stecker mit den Merkmalen des Oberbegriffs des unabhängigen Patentanspruchs 1 ist aus der DE 296 13 311 bekannt. Dieser bekannte Stecker ist Teil eines Adapters für die elektrische Verbindung zwischen Zugfahrzeug und Anhänger und weist je Lastkreis zur Spannungsreduktion von 24 Volt auf 12 Volt einen pulsgeschalteten MOSFET-Transistor als Stromventil in dem Lastkreis auf. Dieses Stromventil in dem jeweiligen Lastkreis wird mit einer solchen Frequenz und einer solchen Pulsbreite getaktet, dass der Strom durch den Lastkreis im zeitlichen Mittel dem Wert mit der gewünschten Eingangsspannung der Elektrik des Anhängers im Gleichstrombetrieb entspricht. Mit anderen Worten wird das jeweilige Stromventil so getaktet, dass nur zur Hälfte der Zeit Strom fließen kann, um bei der Betrachtung im zeitlichen Mittel die gewünschte Reduktion von 24 Volt auf 12 Volt effektiv zu erreichen. Bei dem bekannten Adapter wird der Takt für die Ansteuerung aller Lastkreise d. h. aller Stromventile einmal erzeugt, so dass alle Stromventile synchron getaktet sind.

Aus der DE 103 24 888 A1 ist ein Stecker mit den Merkmalen des Oberbegriffs des unabhängigen Patentanspruchs 1 bekannt, der ebenfalls Teil eines Adapters für die elektrische Verbindung zwischen Zugfahrzeug und Anhänger ist. Hier werden in den einzelnen Lastkreisen vorgesehene Stromventile mit unterschiedlichen Frequenzen getaktet, um die Spannungsreduktion von 24 Volt auf 12 Volt im zeitlichen Mittel zu erreichen. Durch das Takten der Stromventile mit unterschiedlichen Frequenzen soll die Belastung des Bordnetzes des Zugfahrzeuges mit den Schaltimpulsen der Stromventile reduziert werden. Die Frequenzen, mit denen die einzelnen Stromventile getaktet werden, liegen zwischen 70 und 600 Hertz, wobei die einzelnen Taktfrequenzen um etwa 50 bis 70 Hertz gegeneinander versetzt sind.

Die Ausgangsspannung einer Elektrik eines Zugfahrzeugs weist häufig Abweichungen von ihrer Nennspannung auf, und zwar sowohl konstante Abweichungen als auch Schwankungen. Hieraus resultieren insbesondere bei einer Spannungsreduzierung einerseits sehr niedrige Eingangsspannungen, die Beleuchtungen an einem Anhänger zu schwach leuchten lassen, und andererseits zu hohe Eingangsspannungen, die die Leuchtmittel der Beleuchtung eines Anhängers stark belasten und deren Lebensdauer begrenzen, bis zu einem Durchbrennen der Leuchtmittel.

### AUFGABE DER ERFINDUNG

Der Erfindung liegt die Aufgabe zugrunde, einen Stecker mit den Merkmalen des Oberbegriffs des unabhängigen Patentanspruchs 1 aufzuzeigen, der einen besonders einfachen Aufbau aufweist und von seiner Grundkonstruktion her besonders gut geeignet ist, um unterschiedliche Ausgangsspannungen zu kompensieren, ohne dass verglichen mit bekannten Steckern hierfür ein erhöhter Gesamtaufwand zu betreiben wäre.

### LÖSUNG

Erfindungsgemäß wird diese Aufgabe durch einen Stecker mit den Merkmalen des unabhängigen Patentanspruchs 1 gelöst. Bevorzugte Ausführungsformen des neuen Steckers sind in den abhängigen Patentansprüchen 2 bis 12 beschrieben.

### BESCHREIBUNG DER ERFINDUNG

Bei den neuen Steckern ist das getaktete Stromventil für die Reduzierung der vom Zugfahrzeug gelieferten Ausgangsspannung auf die Eingangsspannung der Elektrik des Anhängers in einer für mehrere Lastkreise vorgesehenen Masse- oder Minusleitung vorgesehen. Dies bedeutet, dass das eine Stromventil den Strom in mehreren Lastkreisen gleichzeitig taktet und so die Eingangsspannung über diese mehreren Lastkreise gleichzeitig effektiv reduziert. Anders gesagt weist der neue Stecker weniger Stromventile als Pole für einzelne Lastkreise auf. Hierdurch wird der Aufwand für die Ausbildung des Steckers grundsätzlich reduziert und zwar um ein ganz erhebliches Maß. Typischerweise ist eine Masse- oder Minusleitung bei einem üblichen Stecker für den Anschluss eines Anhängers an ein Zugfahrzeug für fünf oder mehr Lastkreise vorgesehen. Entsprechend werden mindestens vier Stromventile eingespart. Es versteht sich, dass das in der Masse- oder Minusleitung bei dem neuen Stecker vorgesehene Stromventil größer dimensioniert sein muss als ein Stromventil, das nur für einen einzelnen Lastkreis vorgesehen ist, da es in der Lage sein muss, den gesamten Strom durch alle Lastkreise zu führen. Die Ansteuerung, d. h. Taktung des Stromventils ist aber unabhängig davon, welche der Lastkreise, für die die Masse- oder Minusleitung gemeinsam vorgesehen ist, aktuell von dem Zugfahrzeug aus angesteuert werden. Hierdurch wird nur der während der einzelnen Takte fließende Strom variiert. Die gewünschte Spannungsreduktion ergibt sich ausschließlich aus der relativen Dauer der Takte an der Gesamtzeit.

Vorzugsweise wird das Stromventil bei dem neuen Stecker mit einer relativ hohen Frequenz getaktet, konkret mit einer Frequenz von mindestens 50 Hertz, mehr bevorzug von mindestens 100 Hertz. Noch höhere Taktfrequenzen sind möglich, bieten aber in aller Regel keine Vorteile. Bereits bei den genannten Frequenzen sorgen die Leitungskapazitäten und die Kapazitäten der Last dafür, dass die Elektrik des Zugfahrzeugs durch die Impulse des Stromventils nicht ungebührlich belastet wird. Vielmehr "sieht" die Elektrik des Zugfahrzeugs nur einen Gleichstrom. Dies gilt insbesondere dann, wenn ein Glättungskondensator in dem Stecker vorgesehen ist. Ein solcher Glättungskondensator kann vor und/oder hinter dem Stromventil angeordnet sein, je nachdem auf welcher Leitung die Elektrik des Zugfahrzeugs besonders empfindlich auf Impulse reagiert bzw. ob vornehmlich die Lasten in den einzelnen Lastkreisen gegenüber diesen Impulsen geschützt werden sollen.

Vorzugsweise wird das Stromventil mit einer festen Frequenz getaktet, wobei diese feste Frequenz aber einstellbar sein kann, um im Einzelfall auftretende Resonanzen zu vermeiden.

Vorzugsweise wird das Stromventil mit einer variablen Pulsbreite getaktet. Dies gilt nicht nur, um auf unterschiedliche Einstellungen der grundsätzlich festen Frequenz zu kompensieren, sondern kann auch dazu dienen, unterschiedliche von dem Zugfahrzeug gelieferte Ausgangsspannungen auf eine gleichbleibende Eingangsspannung für den Anhänger herabzusetzen.

Dazu kann die Steuerung die von dem Zugfahrzeug gelieferte Ausgangsspannung messen und das Stromventil in Abhängigkeit von der gemessenen Ausgangsspannung so takten, dass der Strom auf der Masse- oder Minusleitung unabhängig von der gemessenen Ausgangsspannung einem Gleichstrom bei der Spannung entspricht, für die die Elektrik des Anhängers ausgelegt ist. Typischerweise beträgt diese Eingangsspannung des Anhängers 12 V.

Konkret kann die Steuerung das Stromventil in Abhängigkeit von der gemessenen Ausgangsspannung so takten, dass der Strom auf der Masse- oder Minusleitung effektiv in einem Anteil der Zeit fließt, der dem Anteil der Eingangsspannung, für die die Elektrik des Anhängers ausgelegt ist, an der gemessenen Ausgangsspannung entspricht. Dies ist alternativ zu einer Variation der Pulsbreite selbst auch dadurch zu erreichen, dass die Frequenz der Taktung bei fester Pulsbreite variiert wird.

Die Steuerung, die die Stromventile taktet, kann die Ausgangsspannung des Zugfahrzeugs zwischen irgendeinem aktuell von dem Zugfahrzeug angesteuerten Pol und dem Pol der Masse- oder Minusleitung an dem Stecker messen. Wenn der Stecker keinen Pol umfasst, an dem beim Betrieb des Anhängers immer eine Spannung, d. h. die Ausgangsspannung der Elektrik des Zugfahrzeugs anliegt, ist die Steuerung so auszulegen, dass sie erkennt, an welchem Pol des Steckers von dem Zugfahrzeug eine Spannung angelegt wird, und basierend auf dieser das Stromventil taktet. Wenn an keinem Pol eine Spannung anliegt, muss auch keine Taktung erfolgen. Entsprechend bedarf die Steuerung in diesem Fall auch keiner Stromversorgung. Wenn der Stecker einen Pol aufweist, an dem beim Betrieb des Anhängers dauerhaft eine Spannung anliegt, so reicht es für die Steuerung aus, die Spannung zwischen diesem Pol und der Masse- oder Minusleitung zu überwachen, zumindest solange dieser Pol auch dieser Masse- oder Minusleitung zugeordnet ist. Für die Verfügbarkeit dieses Dauerpols auf dem Anhänger muss dann auch beim Anliegen von Spannung an dem Dauerpol das Stromventil dauerhaft getaktet werden.

Konkret kann das Stromventil ein Halbleiterbaustein in Form eines so genannten "MOSFET" sein. Auch die Steuerung wird regelmäßig in Halbleitertechnologie ausgebildet sein.

In einer besonders bevorzugten konkreten Ausführungsform ist der neue Stecker Teil eines Adapters zur Zwischenschaltung zwischen eine Steckdose an dem Zugfahrzeug und einen Stecker an dem Anhänger. Dabei kann der Adapter ein das Gehäuse des Steckers und ein Gehäuse einer Steckdose umfassendes zusammenhängendes Gehäuse aufweisen. Zwischen dem Gehäuse des Steckers und dem Gehäuse der Steckdose kann aber auch noch ein Leitungsabschnitt angeordnet sein.

In einer konkreten Anwendung ist der erfindungsgemäße Adapter zur Zwischenschaltung zwischen eine 15-polige Steckdose an dem Zugfahrzeug, was einer Ausgangsnennspannung des Zugfahrzeugs von 24 Volt entspricht, und einen 13-poligen Stecker an dem Anhänger vorgesehen, der einer vorgesehenen Eingangsspannung des Anhängers von 12 V entspricht.

Es gibt auch andere Stecker-/Steckdosenkombinationen für die Spannungsreduzierung von nominellen 24 V auf 12 V, zum Beispiel mit zwei 7-poligen Steckern und/oder Steckdosen. In weiteren konkreten Anwendungen des erfindungsgemäßen Steckers bzw. des erfindungsgemäßen Adapters geht es um eine Reduzierung der effektiven Spannung von nominellen 42 V auf 12 V oder 24 V. Für das Grundprinzip der vorliegenden Erfindung kommt es aber weder auf die nominelle oder gemessene Höhe der Ausgangsspannung noch die Höhe der Eingangsspannung an, für die die Elektrik des Anhängers ausgelegt sind, solange diese bekannt sind bzw. gemessen werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: zeigt den schematischen Aufbau eines erfindungsgemäßen Steckers in einer ersten Ausführungsform und
- **Fig. 2**: zeigt den Aufbau eines erfindungsgemäßen Steckers in einer zweiten, einen Teil eines Adapters ausbildenden Ausführungsform.

### FIGURENBESCHREIBUNG

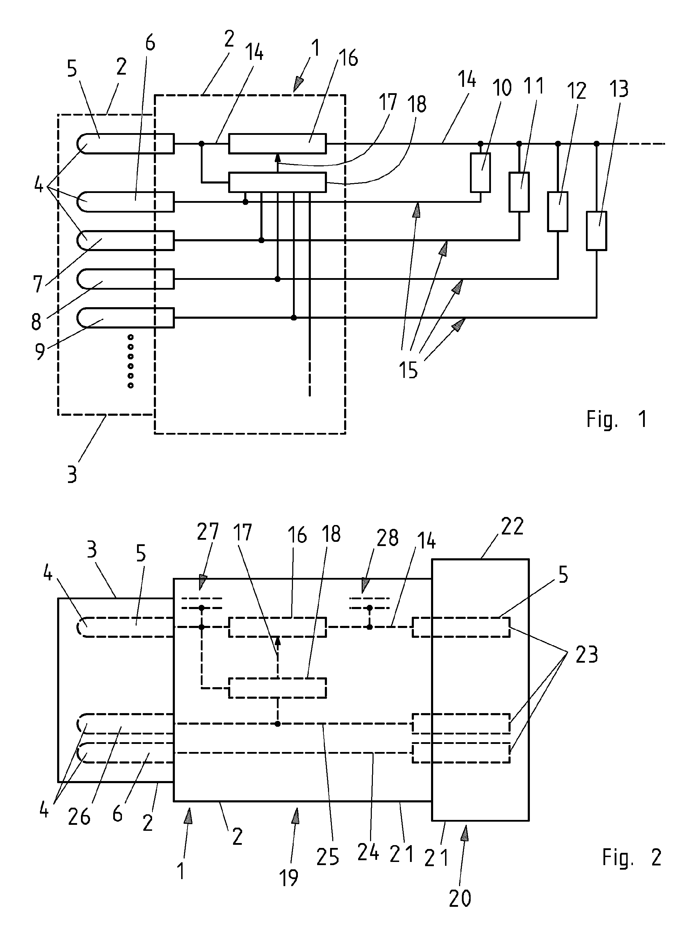

**Fig. 1** gibt einen Stecker 1 schematisch wieder. Der Stecker 1 weist ein Gehäuse 2 auf, in dessen vorderen Teil 3, der zum Einstecken in eine angepasste, hier nicht dargestellte Steckdose vorgesehen ist, Kontaktstifte 4 zum Kontaktieren entsprechender Kontaktbuchsen in der Steckdose angeordnet sind. Jeder der Kontaktstifte 4 bildet einen so genannten Pol 5 bis 9 des Steckers 1 aus. Während in Fig. 1 insgesamt fünf Pole 5 bis 9 gezeigt sind, weisen übliche Stecker zum Anschließen einer Elektrik eines Anhängers an eine Elektrik eines Zugfahrzeugs 7, 13 oder 15 Pole auf. An die Pole 6 bis 9 des Steckers 1 werden vom Zugfahrzeug aus Spannungen angelegt, um Lasten 10 bis 13 auf dem Anhänger, bei denen es sich insbesondere um Leuchten handelt, anzusteuern. Konkret werden vom Zugfahrzeug aus Spannungen an die Pole 6 bis 9 angelegt, um einen Strom durch die Lasten 10 bis 13 hervorzurufen. Dieser Strom fließt von allen Lasten 10 bis 13 über eine gemeinsame Masse- oder Minusleitung 14 zu dem Pol 5 ab, der mit der entsprechenden Masse- oder Minusleitung des Zugfahrzeugs verbunden ist. Anders gesagt ist die Masse- oder Minusleitung 14 für mehrere Lastkreise 15 vorgesehen, in denen jeweils eine der Lasten 10 bis 13 angeordnet ist. Die Lasten 10 bis 13 liegen außerhalb des Steckers 1. Die Lastkreise 15 erstrecken sich ebenso wie die Masse- oder Minusleitung in den Stecker 1 hinein bzw. durch diesen hindurch. In der Masse- oder Minusleitung 14 ist ein Stromventil 16 angeordnet, das den Strom durch die Masse- oder Minusleitung 14 taktet. Dabei wird der Takt, mit dem das Stromventil 16 den Strom auf der Masse- oder Minusleitung 14 taktet durch ein Taktsignal 17 vorgegeben, dass von einer Steuerung 18 bereitgestellt wird. Das Taktsignal 17 wird von der Steuerung 18 so festgelegt, dass die effektiv an den Lasten 10 bis 13 anliegende Spannung unabhängig von einer höheren Ausgangsspannung der Elektrik des Zugfahrzeugs immer einen festen vorgegebenen Wert einhält. Dazu misst die Steuerung 18 die Spannung die zwischen einem der Pole 6 bis 9 und dem Pol 7 anliegt. Wenn hier keine Spannung anliegt, gibt die Steuerung 18 kein Taktsignal 17 an das Stromventil 16 ab, weil dann auch kein Strom durch eine Der Lasten 10 bis 13 fließen muss. Wenn an einem der Pole 6 bis 9 gegenüber dem Pol 5 eine Spannung anliegt, stellt die Steuerung 18 fest, wie groß diese Spannung im Verhältnis zu der Spannung ist, für die die Lasten 10 bis 13 ausgelegt sind. Im Verhältnis dieser Spannungen legt die Steuerung 18 die Pulsbreite des Taktsignals 17 fest. Konkret entspricht das Verhältnis der Periodendauer des Taktsignals 17 zu der Pulsbreite des Taktsignals 17 dem Verhältnis der zwischen den Polen 6 bis 9 und dem Pol 5 gemessenen Spannung zu der Spannung, für die die Lasten 10 bis 13 ausgelegt sind. Die Frequenz des Taktsignals 17 ist dabei vergleichsweise hoch und kann beispielsweise 100 Hertz oder mehr betragen. Der derart gepulste Stromfluss auf der Masse- oder Minusleitung 14 resultiert an den Polen 6 bis 9 auch ohne zusätzliche Maßnahmen in einen Quasigleichstrom, was auf die Inhärenten Kapazitäten der Lastschaltkreise 15 zurückzuführen ist. Da das Taktsignal 17 nur von dem Verhältnis der Ausgangsspannung der Elektrik des Zugfahrzeugs zu der Spannung abhängig ist, für die die Lasten 10 bis 13 ausgelegt sind, ist es bei ausreichender Dimensionierung des Stromventils 16 unerheblich, wie viele Lasten der Lasten 10 bis 13 aktuell über die Pole 6 bis 9 von dem Zugfahrzeug aus angesteuert werden. Bei einem vielpoligen Stecker 1 können mehrere Masse- oder Minusleitungen 14 für mehrere Gruppen von Polen 6 bis 9 und Lasten 10 bis 13 vorgesehen sein. In diesem Fall ist in jeder dieser Masse- bzw. Minusleitungen 14 ein Stromventil 16 angeordnet. Dabei ist eine einzige Steuerung 18 für das Taktsignal aller derartiger Stromventile 16 ausreichend. Es kann aber auch für jedes Stromventil 16 eine eigene Steuerung 18 vorgesehen sein.

**Fig. 2** skizziert einen Adapter 19, der den Stecker 1 mit dessen Gehäuse 2 einteilig mit einer Steckdose 20 und deren Gehäuse 21 zusammenfasst, wobei ein vorderer Teil 22 des Gehäuses 21 der Steckdose 20 zur Aufnahme eines anderen Steckers als des Steckers 1 vorgesehen ist. Konkret kann der Stecker 1 beispielsweise zum Anschluss an eine 24 Volt-Elektrik eines Zugfahrzeugs vorgesehen sein, während die Steckdose 20 auf eine 12 Volt-Elektrik eines Anhängers abgestimmt ist. Bei dem Adapter 19 erstreckt sich die Masse- oder Minusleitung 14 von dem Anschlussstecker 4 des Steckers zu einer Anschlussbuchse 23 der Steckdose. Entsprechende Leitungen 24 und 25 verbinden Anschlussstecker 4 mit Anschlussbuchsen 23 des Pols 6 und eines Pols 26. Der Pol 26 zeichnet sich dadurch aus, dass er beim Einstecken des Steckers 1 in eine Steckdose eines Zugfahrzeugs dauerhaft mit einer Spannung gegenüber dem Pol 5 beaufschlagt ist. Diese Spannung wird von der Steuerung 18 gemessen und zur Generation des Taktsignals 17 für das Stromsignal 16 verwendet, das dann den Strom auf der Masse- oder Minusleitung 14 taktet und damit sowohl den Strom durch den Lastkreis, zu dem die Leitung 25 gehört, als auch durch den Lastkreis, zu dem die Leitung 24 gehört. Zusätzlich sind in Fig. 2 Glättungskondensatoren 27 und 28 angedeutet, die den Strom auf der Masse- oder Minusleitung 24 fahrzeugseitig bzw. anhängerseitig glätten und so zusätzlich zu den inhärenten Kapazitäten einen Schutz vor etwaigen von dem Stromventil 16 ausgehenden Impulsen bieten.

### BEZUGSZEICHENLISTE

- 1: Stecker
- 2: Gehäuse
- 3: Teil
- 4: Kontaktstift
- 5: Pol
- 6: Pol
- 7: Pol
- 8: Pol
- 9: Pol
- 10: Last
- 11: Last
- 12: Last
- 13: Last
- 14: Masse- oder Minusleitung
- 15: Lastkreis
- 16: Stromventil
- 17: Taktsignal
- 18: Steuerung
- 19: Adapter
- 20: Steckdose
- 21: Gehäuse
- 22: Teil
- 23: Kontaktbuchse
- 24: Leitung
- 25: Leitung
- 26: Pol
- 27: Glättungskondensator
- 28: Glättungskondensator

## Patentansprüche

1. Stecker (1) für den elektrischen Anschluss einer für eine niedrigere Eingangsspannung ausgelegten Elektrik eines Anhängers an die eine höhere Ausgangsspannung liefernde Elektrik eines Zugfahrzeugs, wobei in einem Gehäuse (2) des Steckers (1) ein getaktetes Stromventil für eine Reduzierung der von dem Zugfahrzeug gelieferten Ausgangsspannung auf die Eingangsspannung der Elektrik des Anhängers vorgesehen ist, **dadurch gekennzeichnet, dass** das Stromventil (16) in einer Masse- oder Minusleitung (14) für mehrere Lastkreise (15) vorgesehen ist.

2. Stecker nach Anspruch 1, **dadurch gekennzeichnet, dass** das Stromventil (16) mit einer Frequenz von mindestens 50 Hertz, vorzugsweise mindestens 100 Hertz getaktet ist.

3. Stecker nach Anspruch 1 oder 2, **dadurch gekennzeichnet, dass** vor und/oder hinter dem Stromventil (16) ein Glättungskondensator (27, 28) an die Masse- oder Minusleitung (14) angeschlossen ist.

4. Stecker nach einem der Ansprüche 1 bis 3, **dadurch gekennzeichnet, dass** das Stromventil (16) mit einer festen Frequenz getaktet ist.

5. Stecker nach einem der Ansprüche 1 bis 4, **dadurch gekennzeichnet, dass** das Stromventil (16) mit einer variablen Pulsbreite getaktet ist.

6. Stecker nach einem der Ansprüche 1 bis 5, **dadurch gekennzeichnet, dass** eine Steuerung (18) die von dem Zugfahrzeug gelieferte Ausgangsspannung misst und das Stromventil (16) in Abhängigkeit von der gemessenen Ausgangsspannung so taktet, dass der Strom auf der Masse- oder Minusleitung (14) unabhängig von der gemessenen Ausgangsspannung einem Gleichstrom bei der Eingangsspannung entspricht, für die die Elektrik des Anhängers ausgelegt ist.

7. Stecker nach Anspruch 6, **dadurch gekennzeichnet, dass** die Eingangsspannung, für die die Elektrik des Anhängers ausgelegt ist, 12 V beträgt.

8. Stecker nach Anspruch 6 oder 7, **dadurch gekennzeichnet, dass** die Steuerung (18) das Stromventil (16) in Abhängigkeit von der gemessenen Ausgangsspannung so taktet, dass der Strom auf der Masse- oder Minusleitung (14) effektiv in einem Anteil der Zeit fließt, der dem Anteil der Eingangsspannung, für die die Elektrik des Anhängers ausgelegt ist, an der gemessenen Ausgangsspannung entspricht.

9. Stecker nach Anspruch 6, 7 oder 8, **dadurch gekennzeichnet, dass** die Steuerung (18) die von dem Zugfahrzeug gelieferte Ausgangsspannung zwischen einem aktuell von dem Zugfahrzeug angesteuerten Pol (6-9) und dem Pol (5) der Masse- oder Minusleitung (14) an dem Stecker (1) misst.

10. Stecker nach einem der Ansprüche 1 bis 9, **dadurch gekennzeichnet, dass** das Stromventil (16) ein MOSFET ist.

11. Stecker nach einem der Ansprüche 1 bis 10, **dadurch gekennzeichnet, dass** er Teil eines Adapters (19) zur Zwischenschaltung zwischen eine Steckdose an dem Zugfahrzeug und einen Stecker (1) an dem Anhänger ist.

12. Stecker nach Anspruch 11, **dadurch gekennzeichnet, dass** der Adapter (19) ein das Gehäuse (2) des Steckers (1) und ein Gehäuse (21) einer Steckdose (20) umfassendes zusammenhängendes Gehäuse aufweist.
